# EUROPÄISCHE PATENTSCHRIFT

(11) **EP 3 928 606 B1**
(45) Veröffentlichungstag und Bekanntmachung des Hinweises auf die Patenterteilung: **27.09.2023**
(21) Anmeldenummer: 21176195.2
(22) Anmeldetag: 27.05.2021
(51) Int. Cl.: A01B 73/04, A01B 69/00, A01B 79/00

(54) **ANORDNUNG EINES KAMERASYSTEMS AN EINEM LANDWIRTSCHAFTLICHEN ARBEITSAGGREGAT**
ARRANGEMENT OF A CAMERA SYSTEM ON AN AGRICULTURAL WORKING UNIT
AGENCEMENT D'UN SYSTÈME DE CAMÉRA SUR UNE UNITÉ DE TRAVAIL AGRICOLE

(30) Priorität: 26.06.2020 DE 102020116901
(43) Veröffentlichungstag der Anmeldung: 29.12.2021
(73) Patentinhaber: CLAAS E-Systems GmbH, 49201 Dissen (DE)
(72) Erfinder: Lysgaard Andersen, Gert, 3450 Alleroed (DK); Burchardi, Henrik, 3230 Graested (DK)
(74) Vertreter: CLAAS Gruppe

(56) Entgegenhaltungen:
- EP-A2- 1 002 455
- EP-B1- 1 464 214
- EP-B1- 2 316 259
- DE-A1-102017 113 726
- US-B2- 10 617 057

## Beschreibung

Die vorliegende Erfindung betrifft eine Anordnung eines Kamerasystems an einem landwirtschaftlichen Arbeitsaggregat gemäß dem Oberbegriff des Anspruches 1.

Im Rahmen der zunehmenden Automatisierung landwirtschaftlicher Arbeitsmaschinen werden diese inzwischen häufig mit Kamerasystemen und anderen Sensoranordnungen ausgestattet, um den Bediener beim Fahren und bei der Verrichtung landwirtschaftlicher Arbeit zu unterstützen. Insbesondere können landwirtschaftliche Arbeitsaggregate der landwirtschaftlichen Arbeitsmaschine, d. h. Komponenten und Geräte, insbesondere Anbaugeräte, die zur Verrichtung oder Unterstützung landwirtschaftlicher Arbeit dienen, auf diese Weise überwacht und gesteuert werden. Das landwirtschaftliche Arbeitsaggregat weist zumindest einen in einer im Wesentlichen horizontalen Arbeitsstellung über die Breite der Arbeitsmaschine hinausragenden Ausleger auf, welcher mittels wenigstens eines Aktors durch Hochschwenken um eine zur Längsachse der Arbeitsmaschine parallele Achse in eine Transportstellung überführbar ist, in welcher eine für den Transport des Arbeitsaggregates auf der Straße zulässige Gesamtbreite eingehalten wird. In der Transportstellung ragen die Ausleger in vertikaler Richtung auf. Ein derartiges Kamerasystem weist zumindest eine Kamera auf, welche mittels eines Befestigungselementes an dem zumindest einen Ausleger angeordnet ist, wobei das Befestigungselement in der Arbeitsstellung des Arbeitsaggregates im Wesentlichen orthogonal zum Ausleger ausgerichtet ist.

Aus der DE 10 2017 113 726 A1 ist eine Anordnung der eingangs genannte Art bekannt. Weitere Anordnungen sind z.B. aus EP 1 002 455 A2, EP 2 316 259 B1, EP 1 464 214 B1 und US 10 617 057 B2 bekannt.

Um eine Kollision des an einem der Ausleger angeordneten Befestigungselementes und/oder der Kamera mit Komponenten des Arbeitsaggregates oder einem weiteren, am gegenüberliegenden Ausleger angeordneten Befestigungselement in der Transportstellung zu vermeiden, bedarf es einer auf die baulichen Gegebenheiten abgestimmte Anordnung des Befestigungselementes oder der Befestigungselemente. Dabei ist die daraus resultierende Positionierung der oder der Befestigungselemente mit Blick auf die durch das Kamerasystem durchzuführende Überwachung nicht immer optimal.

Somit liegt der vorliegenden Erfindung die Aufgabe zugrunde, eine Anordnung eines Kamerasystems an einem landwirtschaftlichen Arbeitsaggregat weiterzubilden, welche eine optimale Anordnung ermöglicht und dabei eine Kollision der Befestigungselemente und/oder der Kamera beim Überführen in die Transportstellung vermeidet.

Die vorstehende Aufgabe wird bei einer Anordnung eines Kamerasystems an einem landwirtschaftlichen Arbeitsaggregat durch die Merkmale von Anspruch 1 gelöst.

Gemäß dem Anspruch 1 wird eine Anordnung eines Kamerasystems an einem landwirtschaftlichen Arbeitsaggregat vorgeschlagen, welches an einer landwirtschaftlichen Arbeitsmaschine angeordnet ist, wobei das landwirtschaftliche Arbeitsaggregat zumindest einen in einer im Wesentlichen horizontalen Arbeitsstellung über die Breite der Arbeitsmaschine hinausragenden Ausleger aufweist, welcher mittels wenigstens eines Aktors durch Hochschwenken um eine Achse in eine Transportstellung überführbar ist, in welcher eine für den Transport des Arbeitsaggregates auf der Straße zulässige Gesamtbreite eingehalten wird, wobei das Kamerasystem zumindest eine Kamera aufweist, welche mittels eines Befestigungselementes an dem zumindest einen Ausleger angeordnet ist, wobei das Befestigungselement in der Arbeitsstellung des Arbeitsaggregates im Wesentlichen orthogonal zum Ausleger ausgerichtet ist. Erfindungsgemäß ist vorgesehen, dass die zumindest eine Kamera mittels des Befestigungselementes klappbar an dem zumindest einen Ausleger befestigt ist. Durch das Einklappen des wenigstens einen Befestigungselementes und der zumindest einen daran angeordneten Kamera wird die Beschädigungsgefahr dieser Komponenten minimiert. Dies gilt insbesondere dann, wenn das Arbeitsaggregat zwei Ausleger umfasst, an denen jeweils zumindest eine Kamera des Kamerasystems mittels eines Befestigungselementes im Wesentlichen äquidistant angeordnet sind.

Hierzu kann der Ausleger eine Lagerstelle aufweisen, an der das Befestigungselement in Richtung des Auslegers schwenkbar angelenkt ist. In der im Wesentlichen horizontalen Arbeitsstellung des Auslegers des Arbeitsgerätes erstreckt sich das Befestigungselement orthogonal zu diesem in einer vom Boden abgewandter Richtung. Das an der Lagerstelle schwenkbar angelenkte Befestigungselement kann in eine flach am Ausleger anliegende Stellung überführt werden. Flach am Ausleger anliegend heißt dabei, dass zwischen Befestigungselement und dem Ausleger ein Winkel kleiner 45° eingeschlossen ist.

Erfindungsgemäß wird zum Schwenken des Befestigungselementes ein Aktor im Bereich der Lagerstelle angeordnet. Hierbei kann das Befestigungselement mit seinem dem Ausleger zugewandten Ende mittelbar oder unmittelbar mit dem Aktor verbunden sein, um diesen zu schwenken.

Hierzu umfasst die Arbeitsmaschine oder das Arbeitsaggregat erfindungsgemäß eine Steuereinheit, welche zur Ansteuerung des wenigstens einen Aktors des Auslegers und des Aktors zum Schwenken des Befestigungselementes eingerichtet ist.

Insbesondere kann die Steuereinheit dazu eingerichtet sein, die Aktoren gleichzeitig oder zeitlich versetzt anzusteuern. Insbesondere eine zeitlich versetzte Ansteuerung der Aktoren hat den Vorteil, dass zunächst der Aktor des Befestigungselementes angesteuert wird, um diesen in eine flach am Ausleger anliegende Stellung zu überführen, bevor der wenigstens eine Aktor des Auslegers angesteuert wird, um den Ausleger von der Arbeitsstellung in die Transportstellung zu überführen.

Weiterhin ist die Steuereinheit erfindungsgemäß dazu eingerichtet, den Aktor zum Schwenken des Befestigungselementes in Abhängigkeit von einer Ansteuerung des wenigstens einen Aktors des Auslegers anzusteuern. Hierbei kann das Auslösen eines Steuerbefehls zum Überführen des oder der Ausleger aus der Arbeitsstellung in die Transportstellung und umgekehrt herangezogen werden, um einen korrespondierenden Steuerbefehl zur Ansteuerung des Aktors zum Schwenken des Befestigungselementes zu erzeugen. Damit kann ausgehend von der jeweiligen Ausgangsstellung des Auslegers, der Arbeitsstellung oder der Transportstellung, das Befestigungselement in seine flach am Ausleger anliegende Stellung oder in seine zum Ausleger orthogonale Stellung überführt werden. Wird der Ausleger aus der Arbeitsstellung in die Transportstellung überführt, wird das Befestigungselement vorzugsweise vorab in seine flach am Ausleger anliegende Stellung überführt, bevor der Ausleger seine Transportstellung einnimmt. Insbesondere kann der Aktor zum Schwenken des Befestigungselementes gegenüber dem Aktor des Auslegers zeitlich vorrangig angesteuert werden. Dabei kann der Aktor zum Schwenken des Befestigungselementes mit einem solchen zeitlichen Versatz gegenüber dem Aktor des Auslegers angesteuert werden, dass das Befestigungselement seine flach am Ausleger anliegende Stellung einnimmt, bevor der Aktor des Auslegers angesteuert wird. Wird der Ausleger hingegen aus der Transportstellung in die Arbeitsstellung überführt, kann der Aktor zum Schwenken des Befestigungselementes vorzugsweise zeitlich nachrangig zum Aktor des Auslegers angesteuert werden.

Bevorzugt kann der wenigstens eine Aktor des Auslegers als Linearantrieb ausgeführt sein. Insbesondere kann der wenigstens eine Aktor des Auslegers als ein Hydraulikzylinder oder ein elektromechanischer Linearantrieb ausgeführt sein.

Vorzugsweise kann der Aktor zum Schwenken des Befestigungselementes als Rotationsantrieb oder als Linearantrieb ausgeführt sein. Dabei kann der Aktor zum Schwenken des Befestigungselementes als ein Hydraulikzylinder, ein Pneumatikzylinder, ein Schraubgetriebe oder ein elektromechanischer Linearantrieb ausgeführt sein. Als Rotationsantrieb kommt insbesondere ein Elektromotor in Betracht.

Gemäß einer Ausgestaltung kann der Aktor zum Schwenken des Befestigungselementes als Schubgelenk ausgeführt sein.

Vorzugsweise kann das Kamerasystem zumindest zwei im gleichen Abstand zur Mitte des Arbeitsaggregates angeordnete Befestigungselemente und jeweils zumindest eine am jeweiligen Befestigungselement angeordnete Kamera aufweisen.

Weiterhin wird die eingangs gestellte Aufgabe durch eine landwirtschaftliche Arbeitsmaschine mit einem Arbeitsaggregat gelöst, an dem ein Kamerasystem angeordnet ist, wobei die Anordnung des Kamerasystems nach einem der Ansprüche 1 bis 10 ausgeführt ist.

Die vorliegende Erfindung wird nachstehend anhand eines in den Zeichnungen dargestellten Ausführungsbeispieles näher erläutert.

### Es zeigen:

- Fig. 1: eine landwirtschaftliche Arbeitsmaschine mit einem landwirtschaftlichen Arbeitsaggregat in einer Betriebssituation;
- Fig. 2: eine Seitenansicht des landwirtschaftlichen Arbeitsaggregats der landwirtschaftlichen Arbeitsmaschine aus Fig. 1 mit aufgesetzter Kamera; und
- Fig. 3: eine schematische Darstellung von Befestigungselementen zur Anordnung von Kameras an einem jeweiligen Ausleger des landwirtschaftlichen Arbeitsaggregates.

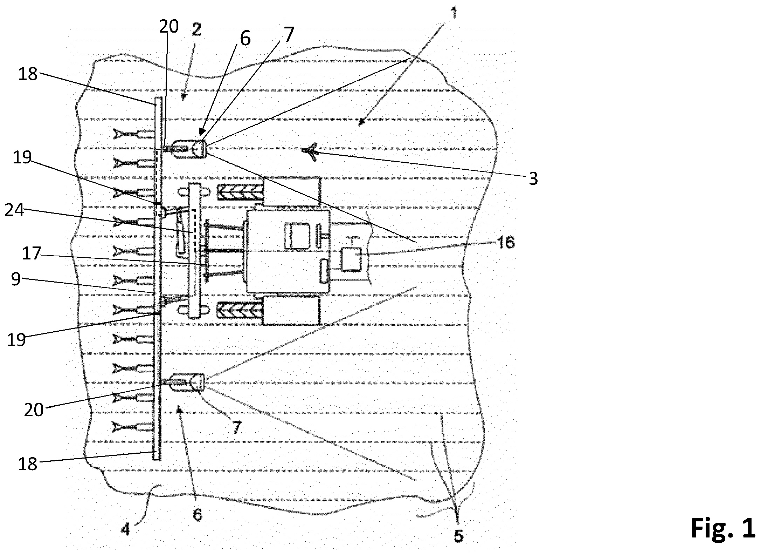

Die Darstellung in Fig. 1 zeigt eine schematische Draufsicht auf eine landwirtschaftliche Arbeitsmaschine mit einem landwirtschaftlichen Arbeitsaggregat in einer Betriebssituation. Die vorschlagsgemäße Lösung lässt sich auf einen weiten Bereich landwirtschaftlicher Arbeitsmaschinen, insbesondere selbstfahrender landwirtschaftlicher Arbeitsmaschinen, anwenden. Dazu gehören Zugmaschinen, insbesondere Traktoren, und Erntemaschinen, insbesondere Mähdrescher, Feldhäcksler oder dergleichen. Bei dem dargestellten und insoweit bevorzugten Ausführungsbeispiel handelt es sich bei der landwirtschaftlichen Arbeitsmaschine 1 um einen Traktor, der in an sich üblicher Weise mit einem landwirtschaftlichen Arbeitsaggregat 2 in Form eines Anbaugeräts ausgestattet ist. Bei dem landwirtschaftlichen Arbeitsaggregat 2 handelt es sich hier beispielsweise um eine mechanische Hacke oder um einen Grubber. Die Ausführungen zu einem Traktor bzw. zu einem solchen landwirtschaftlichen Arbeitsaggregat gelten für alle anderen Arten von landwirtschaftlichen Arbeitsmaschinen bzw. landwirtschaftlichen Arbeitsaggregaten entsprechend.

Die landwirtschaftliche Arbeitsmaschine 1 und das landwirtschaftliche Arbeitsaggregat 2 werden von einer Bedienperson, dem Fahrer, bedient, wobei als Bedienerunterstützung eine Steuereinheit 16 vorgesehen ist, welches beispielsweise die Geschwindigkeit und/oder den Lenkwinkel der landwirtschaftlichen Arbeitsmaschine 1 und/oder die Arbeitshöhe des landwirtschaftlichen Arbeitsaggregats 2, insbesondere vollautomatisch, steuern kann. Die Steuerung von landwirtschaftlicher Arbeitsmaschine 1 und/oder landwirtschaftlichem Arbeitsaggregat 2 durch die Steuereinheit 16 ermöglicht eine besonders präzise Bearbeitung eines eine Vielzahl von Nutzpflanzen 3 umfassenden Feldbestandes. Beispielsweise kann mit dem hier dargestellten landwirtschaftlichen Arbeitsaggregat 2 in Form einer mechanischen Hacke oder eines Grubbers, der Boden 4 zwischen den Nutzpflanzen 3 besonders präzise und umfassend bearbeitet, beispielsweise aufgebrochen, werden, ohne die Nutzpflanzen 3 dabei zu beschädigen. Der Bereich zwischen den Nutzpflanzen 3 wird dabei besonders präzise erkannt, sogar dann, wenn dieser von unerwünschten Wildkräutern (Schadpflanzen) bewachsen ist. Insbesondere können Pflanzenreihen 5 mit mehreren Nutzpflanzen 3 besonders exakt erkannt werden.

Das landwirtschaftliche Arbeitsaggregat 2 weist einen Mittenabschnitt 9 auf, in dem das Arbeitsaggregat 2 mittels geeigneter Anbindungsmittel an einer Anbauvorrichtung 17 der Arbeitsmaschine 1, wie einem Dreipunkt-Kraftheber, anbringbar ist. Weiterhin weist das landwirtschaftliche Arbeitsaggregat 2 zumindest einen in einer im Wesentlichen horizontalen Arbeitsstellung über die Breite der Arbeitsmaschine 1 hinausragenden Ausleger 18 auf. Hier und vorzugsweise sind zwei Ausleger 18 an dem Mittenabschnitt 9 angeordnet, die sich beidseitig an den Mittenabschnitt 9 in dessen Längsrichtung erstreckend anschließen. Die Ausleger 18 sind insbesondere spiegelsymmetrisch ausgeführt. Der zumindest eine Ausleger 18 ist mittels wenigstens eines Aktors 21 durch Hochschwenken um eine Achse 19 in eine Transportstellung überführbar, in welcher eine für den Transport des Arbeitsaggregates 2 auf der Straße zulässige Gesamtbreite eingehalten wird. Der wenigstens eine Aktor 21 des Auslegers 18 ist vorzugsweise als Linearantrieb ausgeführt. Im gezeigten Ausführungsbeispiel weist das Arbeitsaggregat 2 zwei Ausleger 18 auf, welche in der dargestellten Arbeitsstellung über die Breite der Arbeitsmaschine 1 hinausragen. In der Transportstellung, in welcher sich der jeweilige Ausleger 18 in vertikaler Richtung erstreckt, schließt der jeweilige Ausleger 18 mit dem Mittenabschnitt 9 einen Schwenkwinkel ein, der vorzugsweise etwa 90° oder weniger beträgt.

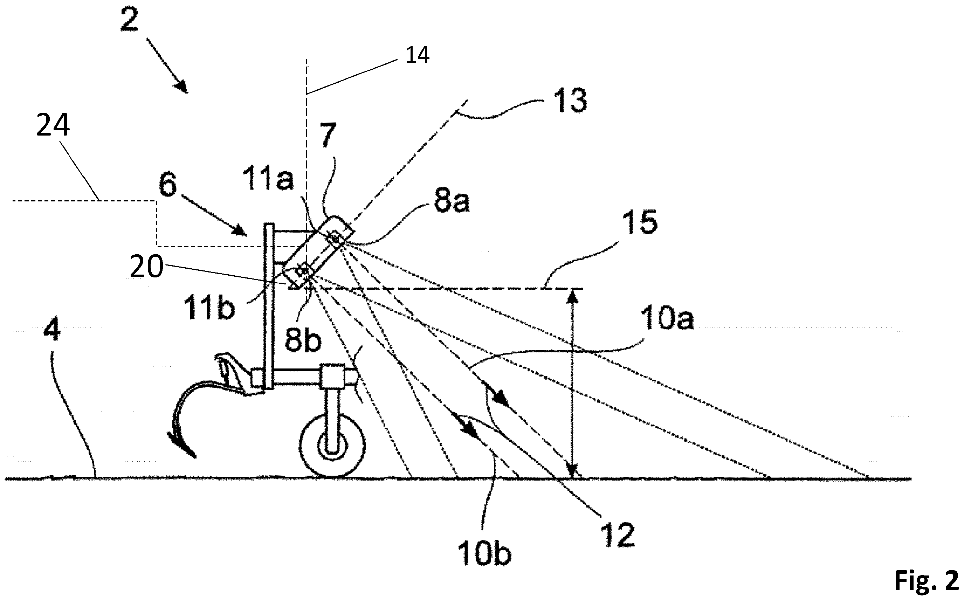

In Fig. 2 ist eine Seitenansicht des landwirtschaftlichen Arbeitsaggregats 2 aus Fig. 1 dargestellt. Die landwirtschaftliche Arbeitsmaschine 1 weist ein Kamerasystem 6 mit zumindest einer Kamera 7 auf, insbesondere mit einer 3D-Kamera, die hier und vorzugsweise eine Stereokamera mit zwei Kameraobjektiven 8a und 8b ist. Die zumindest eine Kamera 7 ist gemäß dem in Fig. 2 gezeigten Ausführungsbeispiel auf dem landwirtschaftlichen Arbeitsaggregat 2 montiert, kann aber grundsätzlich zusätzlich auch auf der Arbeitsmaschine 1 angeordnet werden, an der das Arbeitsaggregat 2 montiert ist. Die jeweilige Kamera 7 ist mittels eines Befestigungselementes 20 an dem zumindest einen Ausleger 18 angeordnet. Wie aus Fig. 1 ersichtlich ist, ist auf jedem der Ausleger 18 ein Kamerasystem 6 mit zumindest einer Kamera 7 mittels eines Befestigungselementes 20 angeordnet. Die Befestigungselemente 20 sind als starre Stangen oder Streben ausgeführt, an denen die zumindest eine Kamera 7 höhenverstellbar angeordnet ist. In der Arbeitsstellung des Arbeitsaggregates 2 ist das jeweilige Befestigungselement 20 im Wesentlichen orthogonal zum Ausleger 18 ausgerichtet. Das Kamerasystem 6 ist durch Signalleitungen 24 mit der Steuereinheit 16 verbunden.

Das jeweilige Kamerasystem 6 ist konfiguriert, mittels der Kamera 7 den Feldbestand, d.h. die Nutzpflanzen 3 bzw. Pflanzenreihen 5 aus Nutzpflanzen 3, insbesondere in Fahrtrichtung vor dem landwirtschaftlichen Arbeitsaggregat 2, zu erfassen und entsprechende 3D-Informationen des Feldbestands zu generieren, indem mit der Kamera 7 stereoskopische Bildpaare entlang zweier verschiedener Blickachsen 10a, 10b aufgenommen werden. Die Blickachsen 10a, 10b sind hier definiert als die Achsen, die von den optischen Zentren 11a, 11b der Kamera 7 bzw. der Kameraobjektive 8a und 8b der Kamera 7 in die Blickrichtung 12 verlaufen. Wie die Darstellung nach Fig. 2 beispielhaft zeigt, ist die Blickrichtung 12 der Kamera 7 hier etwa 45° zur horizontalen Ebene 15 geneigt. Die optischen Zentren 11a, 11b der Kamera 7 sind durch eine Basislinie 13 miteinander verbunden, die bezüglich der horizontalen Ebene 15 geneigt ist, hier entsprechend ebenfalls um 45°. Die Basislinie 13 erstreckt sich, wie Fig. 2 zeigt, in einer Ebene 14, die sich orthogonal zur horizontalen Ebene 15 erstreckt.

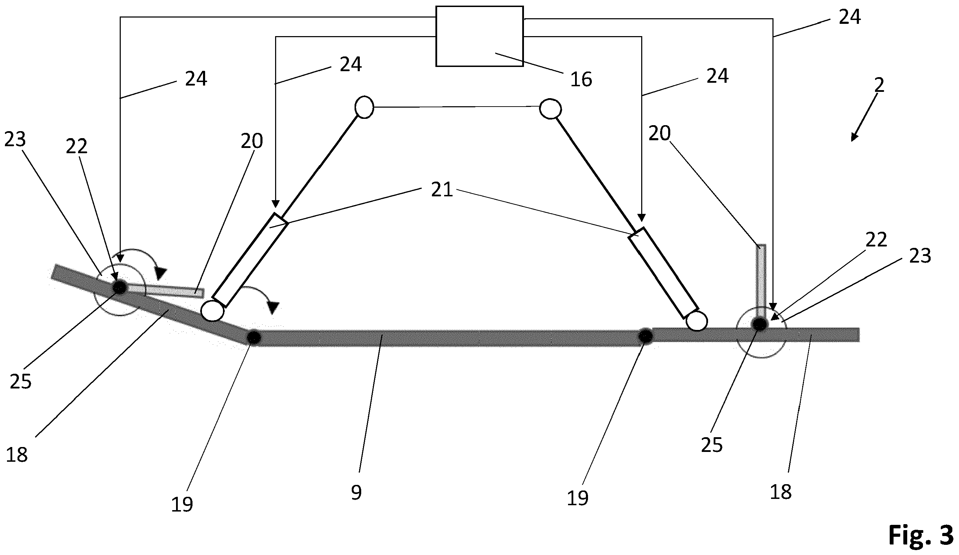

Fig. 3 zeigt eine schematische Darstellung der Befestigungselemente 20 zur Anordnung von Kameras 7 an einem jeweiligen Ausleger 18 des landwirtschaftlichen Arbeitsaggregates 2. Die Ausleger 18 sind mittel der als Hydraulikzylinder ausgeführten Aktoren 21 durch Hochschwenken um die Achse 19, die im Wesentlichen parallel zur Längsachse der Arbeitsmaschine 1 verläuft, jeweils aus ihrer Arbeitsstellung in die Transportstellung überführbar und umgekehrt. Die Ansteuerung der Aktoren 21 erfolgt durch die Steuereinheit 16, welche durch Signalleitungen 24 signaltechnisch mit den Aktoren 21 bzw. diesen zugeordneten Steuervorrichtungen verbunden ist. Die Kameras 7 sind durch die Befestigungselemente 20 äquidistant zueinander an dem jeweiligen Ausleger 18 angeordnet. Um eine Kollision des Befestigungselementes 20 bzw. der Kamera 7 mit dem gegenüberliegenden Ausleger 18 in der Transportstellung zu vermeiden, ist vorgesehen, dass die zumindest eine Kamera 7 mittels des Befestigungselementes 20 klappbar an dem zumindest einen Ausleger 18 befestigt ist.

Hierzu weist der jeweilige Ausleger 18 eine Lagerstelle 22 auf, an der das Befestigungselement 20 in Richtung des Auslegers 18 schwenkbar angelenkt ist. Zum Schwenken des Befestigungselementes 20 ist ein Aktor 23 im Bereich der Lagerstelle 22 angeordnet. Der jeweilige Aktor 23 steht ebenfalls durch eine Steuerleitung 24 mit der Steuereinheit 16 signaltechnisch in Verbindung. Der jeweilige Aktor 23 zum Schwenken des Befestigungselementes 20 ist bevorzugt als Rotationsantrieb ausgeführt. Alternativ kann der jeweilige Aktor 23 als Linearantrieb ausgeführt sein. Ebenfalls denkbar ist eine Ausführung des jeweiligen Aktors 23 als Schubgelenk. Bei einer Ausführung des jeweiligen Aktor 23 als Rotationsantrieb ist das zu schwenkende Befestigungselement 20 an dessen Antriebswelle 25 drehfest angeordnet.

Die Steuereinheit 16 der Arbeitsmaschine 1 ist dazu eingerichtet, den wenigstens einen Aktor 21 des Auslegers 18 und den Aktor 23 zum Schwenken des Befestigungselementes 20 anzusteuern. Dabei ist die Steuereinheit 16 dazu eingerichtet ist, die Aktoren 21 und 23 gleichzeitig oder zeitlich versetzt anzusteuern. Bevorzugt werden die Aktoren 21 und 23 zeitlich versetzt angesteuert, wobei die Aktoren 23 zum Schwenken des Befestigungselementes 20 zuerst angesteuert werden.

So kann die Steuereinheit 16 dazu eingerichtet sein, den Aktor 23 zum Schwenken des Befestigungselementes 20 in Abhängigkeit von einer Ansteuerung des wenigstens einen Aktors 21 des Auslegers 18 anzusteuern. Hierbei kann das Auslösen eines Steuerbefehls zum Überführen des oder der Ausleger 18 aus der Arbeitsstellung in die Transportstellung und umgekehrt herangezogen werden, um einen korrespondierenden Steuerbefehl zur Ansteuerung des Aktors 23 zum Schwenken des jeweiligen Befestigungselementes 20 zu erzeugen. Damit kann ausgehend von der jeweiligen Ausgangsstellung des Auslegers 18, d.h. der Arbeitsstellung oder der Transportstellung, das Befestigungselement 20 in seine flach am Ausleger 18 anliegende Stellung zur Überführung in die Transportstellung oder in seine zum Ausleger 18 orthogonale Stellung zur Überführung in die Arbeitsstellung überführt werden.

Wird der jeweilige Ausleger 18 aus der Arbeitsstellung in die Transportstellung überführt, wird das Befestigungselement 20 vorzugsweise vorab in seine flach am Ausleger 18 anliegende Stellung überführt, bevor der Ausleger 18 seine Transportstellung einnimmt. Bevorzugt wird hierzu der Aktor 23 zum Schwenken des Befestigungselementes 20 gegenüber dem Aktor 21 des Auslegers 18 zeitlich vorrangig angesteuert. Dabei kann der Aktor 23 zum Schwenken des Befestigungselementes 20 mit einem solchen zeitlichen Versatz gegenüber dem Aktor 21 des Auslegers 18 angesteuert werden, dass das Befestigungselement 20 seine im Wesentlichen flach am Ausleger 18 anliegende Stellung einnimmt, bevor der Aktor 21 des Auslegers 18 angesteuert wird, um diesen zu schwenken. Wird der Ausleger 18 hingegen aus der Transportstellung in die Arbeitsstellung überführt, kann der Aktor 23 zum Schwenken des Befestigungselementes 20 vorzugsweise zeitlich nachrangig zum Aktor 21 des Auslegers 18 angesteuert werden. Hierbei kann es bereits ausreichen, dass die sich voneinander weg bewegenden Ausleger 18 mit dem Mittenabschnitt 9 einen Schwenkwinkel größer 90°, vorzugsweise größer 100°, einschließen, um Kollisionen von Kameras 7 bzw. Befestigungselementen 20 zu vermeiden.

### Bezugszeichenliste

- 1: Arbeitsmaschine
- 2: Arbeitsaggregat
- 3: Nutzpflanze
- 4: Boden
- 5: Pflanzenreihe
- 6: Kamerasystem
- 7: Kamera
- 8a: Kameraobjektiv
- 8b: Kameraobjektiv
- 9: Mittenabschnitt
- 10a: Blickachse
- 10b: Blickachse
- 11a: Optisches Zentrum
- 11b: Optisches Zentrum
- 12: Blickrichtung
- 13: Basislinie
- 14: Ebene der Basislinie
- 15: Ebene
- 16: Steuereinheit
- 17: Anbauvorrichtung
- 18: Ausleger
- 19: Achse
- 20: Befestigungselement
- 21: Aktor
- 22: Lagerstelle
- 23: Aktor
- 24: Signalleitung
- 25: Antriebswelle

## Patentansprüche

1. Anordnung eines Kamerasystems (6) an einem landwirtschaftlichen Arbeitsaggregat (2), welches an einer landwirtschaftlichen Arbeitsmaschine (1) angeordnet ist, wobei das landwirtschaftliche Arbeitsaggregat (2) zumindest einen in einer im Wesentlichen horizontalen Arbeitsstellung über die Breite der Arbeitsmaschine (1) hinausragenden Ausleger (18) aufweist, welcher mittels wenigstens eines ersten Aktors (21) durch Hochschwenken um eine Achse (19) in eine Transportstellung überführbar ist, in welcher eine für den Transport des Arbeitsaggregates (2) auf der Straße zulässige Gesamtbreite eingehalten wird, wobei das Kamerasystem (6) zumindest eine Kamera (7) aufweist, welche mittels eines Befestigungselementes (20) an dem zumindest einen Ausleger (18) angeordnet ist, wobei das Befestigungselement (20) in der Arbeitsstellung des Arbeitsaggregates (2) im Wesentlichen orthogonal zum Ausleger (18) ausgerichtet ist, wobei die zumindest eine Kamera (7) mittels des Befestigungselementes (20) klappbar an dem zumindest einen Ausleger (18) befestigt ist, zum Schwenken des Befestigungselements (20) ein zweiter Aktor wobei (23) im Bereich der Lagerstelle (22) angeordnet ist, wobei die Arbeitsmaschine (1) oder das Arbeitsaggregat (2) eine Steuereinheit (16) umfasst, welche zur Ansteuerung des wenigstens einen ersten Aktors (21 ) des Auslegers (18) und des zweiten Aktors (23) zum Schwenken des Befestigungselementes (20) eingerichtet ist, wobei die Steuereinheit (16) dazu eingerichtet ist, den zweiten Aktor (23) zum Schwenken des Befestigungselementes (20) in Abhängigkeit von einer Ansteuerung des wenigstens einen ersten Aktors (21) des Auslegers (18) anzusteuern.

2. Anordnung nach Anspruch 1, **dadurch gekennzeichnet, dass** der Ausleger (18) eine Lagerstelle (22) aufweist, an der das Befestigungselement (20) in Richtung des Auslegers (18) schwenkbar angelenkt ist.

3. Anordnung nach Anspruch 1, **dadurch gekennzeichnet, dass** die Steuereinheit (16) dazu eingerichtet ist, die Aktoren (21, 23) gleichzeitig oder zeitlich versetzt anzusteuern.

4. Anordnung nach einem der Ansprüche 1 bis 3, **dadurch gekennzeichnet, dass** der wenigstens eine erste Aktor (21 ) des Auslegers (18) als Linearantrieb ausgeführt ist.

5. Anordnung nach einem der Ansprüche 1 bis 4, **dadurch gekennzeichnet, dass** der zweite Aktor (23) zum Schwenken des Befestigungselementes (18) als Rotationsantrieb oder als Linearantrieb ausgeführt ist.

6. Anordnung nach einem der Ansprüche 1 bis 4, **dadurch gekennzeichnet, dass** der zweite Aktor (23) zum Schwenken des Befestigungselementes (18) als Schubgelenk ausgeführt ist.

7. Anordnung nach einem der Ansprüche 1 bis 6, **dadurch gekennzeichnet, dass** das Kamerasystem (6) zumindest zwei im gleichen Abstand zur Mitte des Arbeitsaggregates (2) angeordnete Befestigungselemente (20) und jeweils zumindest eine daran angeordnete Kamera (7) aufweist.

## Claims

1. An arrangement of a camera system (6) on an agricultural working assembly (2) which is disposed on an agricultural working machine (1), wherein the agricultural working assembly (2) has at least one extension arm (18) which protrudes beyond the width of the working machine (1) in a substantially horizontal working position which can be transferred by means of at least one first actuator (21) by pivoting up about an axis (19) into a transport position in which an overall width which is permitted for the transport of the working assembly (2) on the road is maintained, wherein the camera system (6) has at least one camera (7) which is disposed on the at least one extension arm (18) by means of a fastening element (20), wherein, in the working position of the working assembly (2), the fastening element (20) is orientated substantially orthogonally to the extension arm (18), wherein the at least one camera (7) is fastened in a foldable manner by means of the fastening element (20) to the at least one extension arm (18), wherein a second actuator (23) for pivoting the fastening element (20) is disposed in the region of the bearing (22), wherein the working machine (1) or the working assembly (2) comprises a control unit (16) which is configured to activate the at least one first actuator (21) of the extension arm (18) and the second actuator (23) for pivoting the fastening element (20), wherein the control unit (16) is configured to activate the second actuator (23) for pivoting the fastening element (20) as a function of an activation of the at least one first actuator (21) of the extension arm (18).

2. The arrangement according to claim 1, **characterized in that** the extension arm (18) has a bearing (22) about which the fastening element (20) is pivotable in the direction of the extension arm (18).

3. The arrangement according to claim 1, **characterized in that** the control unit (16) is configured to activate the actuators (21, 23) simultaneously or at different times.

4. The arrangement according to one of claims 1 to 3, **characterized in that** the at least one first actuator (21) of the extension arm (18) is configured as a linear actuator.

5. The arrangement according to one of claims 1 to 4, **characterized in that** the second actuator (23) for pivoting the fastening element (18) is configured as a rotary drive or as a linear actuator.

6. The arrangement according to one of claims 1 to 4, **characterized in that** the second actuator (23) for pivoting the fastening element (18) is configured as a sliding joint.

7. The arrangement according to one of claims 1 to 6, **characterized in that** the camera system (6) has at least two fastening elements (20) disposed at the same distance from the centre of the working assembly (2), each having at least one camera (7) disposed thereon.

## Revendications

1. Agencement d'un système de caméras (6) sur un organe de travail agricole (2) qui est disposé sur une machine de travail agricole (1), l'organe de travail agricole (2) comportant au moins un bras (18) qui, dans une position de travail sensiblement horizontale, excède la largeur de la machine de travail (1) et qui, au moyen au moins d'un premier actionneur (21), peut être transféré, par relevage autour d'un axe (19), dans une position de transport dans laquelle une largeur hors tout autorisée pour le transport de l'organe de travail (2) sur la route est respectée, le système de caméras (6) comportant au moins une caméra (7) qui est disposée sur le au moins un bras (18) au moyen d'un élément de fixation (20), l'élément de fixation (20) étant orienté, dans la position de travail de l'organe de travail (2), sensiblement orthogonalement par rapport au bras (18), la au moins une caméra (7) étant fixée au moyen de l'élément de fixation (20) de manière repliable contre le au moins un bras (18), un second actionneur (23) pour le pivotement de l'élément de fixation (20) étant disposé dans la zone du point d'appui (22), la machine de travail (1) ou l'organe de travail (2) incluant une unité de commande (16) qui est agencée pour commander le au moins un premier actionneur (21) du bras (18) et le second actionneur (23) pour le pivotement de l'élément de fixation (20), l'unité de commande (16) étant agencée pour commander le second actionneur (23) pour le pivotement de l'élément de fixation (20) en fonction d'une commande du au moins un premier actionneur (21) du bras (18).

2. Agencement selon la revendication 1, **caractérisé en ce que** le bras (18) comporte un point d'appui (22) au niveau duquel l'élément de fixation (20) est articulé de manière pivotante dans la direction du bras (18).

3. Agencement selon la revendication 1, **caractérisé en ce que** l'unité de commande (16) est agencée pour commander les actionneurs (21, 23) simultanément ou avec un décalage temporel.

4. Agencement selon une des revendications 1 à 3, **caractérisé en ce que** le au moins un premier actionneur (21) du bras (18) est conformé en entraînement linéaire.

5. Agencement selon une des revendications 1 à 4, **caractérisé en ce que** le second actionneur (23) pour le pivotement de l'élément de fixation (18) est conformé en entraînement rotatif ou en entraînement linéaire.

6. Agencement selon une des revendications 1 à 4, **caractérisé en ce que** le second actionneur (23) pour le pivotement de l'élément de fixation (18) est conformé en articulation à glissière.

7. Agencement selon une des revendications 1 à 6, **caractérisé en ce que** le système de caméras (6) comporte au moins deux éléments de fixation (20) disposés à égale distance du milieu de l'organe de travail (2) et respectivement au moins une caméra (7) disposée dessus.
